# EUROPÄISCHE PATENTSCHRIFT

(11) **EP 2 375 085 B1**
(45) Veröffentlichungstag und Bekanntmachung des Hinweises auf die Patenterteilung: **28.08.2019**
(21) Anmeldenummer: 11002322.3
(22) Anmeldetag: 21.03.2011
(51) Int. Cl.: F15B 15/28, F16K 37/00, G01B 7/02, F15B 15/10

(54) **Stellantrieb zum Stellen eines Stellglieds und Verfahren zum Erfassen der Stellung des Stellglieds**
Actuating device for adjusting an actuator and method for determining the position of the actuator
Mécanisme de commande pour le réglage d'un actionneur et procédé d'établissement du réglage de l'actionneur

(30) Priorität: 12.04.2010 DE 102010014668
(43) Veröffentlichungstag der Anmeldung: 12.10.2011
(73) Patentinhaber: Samson Aktiengesellschaft, 60314 Frankfurt (DE)
(72) Erfinder: Kiesbauer, Jörg, Dr., 64859 Eppertshausen (DE); Kolbenschlag, Stefan, 64291 Darmstadt (DE); Schärtner, Karl-Bernd, 61130 Nidderau (DE); Valentin-Rumpel, Frank, 64823 Groß-Umstadt (DE)
(74) Vertreter: Schmid, Nils T.F.

(56) Entgegenhaltungen:
- DE-A1- 10 223 870
- US-A1- 2004 154 466

## Beschreibung

Die Erfindung betrifft einen Stellantrieb zum Stellen eines Stellglieds, insbesondere eines Ventilglieds, für eine prozesstechnische Anlage, sowie ein Verfahren zum Erfassen der Stellung oder des Stellwegs des Stellglieds. Bekannte Stellantriebe sind häufig mit einer Sicherheitsfunktion ausgestattet, durch die das Stellglied in eine Sicherheitsstellung, wie eine vollständig geöffnete oder vollständig geschlossene Stellung für ein Ventilglied, verfahren werden kann.

Um eine Sicherheitsfunktion zu realisieren, haben die bekannten Stellantriebe wenigstens eine Rückstellfeder.

In vielen Anwendungsbereichen werden die Stellantriebe durch ein Arbeitsfluid beispielsweise hydraulisch oder pneumatisch betrieben. Diese so genannten Fluidantriebe sind in der Fabrikautomation und der Prozesstechnik eingesetzt. Die Fluidantriebe haben einen Kolben oder eine Membran als drucktragende Fläche. Je nach mechanischer Ankopplung des Kolbens oder der Membran an Bewegungsübertragungsgetriebe kann eine Linear- oder Schwenkbewegung erzeugt werden. Bei Ausfall der fluidischen Antriebsenergie soll die definierte Sicherheitsstellung eingenommen werden, was durch die mechanische Rückstellfeder realisiert wird.

In vielen Anwendungen sind derartige Stellantriebe Teil eines Regelkreises, und eine Positionsmesseinheit detektiert die Stellung des Stellglieds. Bevorzugt wird ein Fluid zum Betreiben des Antriebs verwendet, aber auch elektrische Stellantriebe sind bekannt, die mittels eines Federspeichers eine Sicherheitsstellung realisieren.

Einen magnetisch wirkenden Stellantrieb mit einer Feder für die Sicherheitsstellung beschreibt US 20080204175 A1. Die Anmeldung offenbart eine Tauchspule als elektromagnetischen Antrieb, der Teil eines Regelkreises ist, wobei die Stellung des Antriebs an der Antriebsstange mittels eines Hebels detektiert wird.

EP 917675 B1 beschreibt einen Stellungsregler für einen pneumatischen Antrieb mit drei Federn, einem Stellungsregler und einem Stellungsmelder der ähnlich dem Stellantrieb von US 20080204175 mit einer Schubstange gekoppelt ist. Es wird eine minimale Stellschrittweite ermittelt und weitere Stellschritte bestimmt.

Eine andere Art der Positionsbestimmung an einem Kolbenantrieb beschreibt EP 1752665 B1. Hier ist eine pneumatischer Antrieb mit Mikrowellen Positionsmessung vorgesehen. Federn für die Sicherheitsstellung sind in diesem Fall nicht vorgesehen.

Die EP 1846681 B1 beschreibt eine Vorrichtung zur Steuerung einer Schaltbewegung eines Ventils. Ein Ventilantrieb in Form eines Linearkolbens mit einer Feder ist mit einem Ventilglied gekoppelt, und die Ventilbewegung wird an der dem Ventil abgewandten Seite mit Stellungsmeldern gemessen.

Ein anderer Typ Stellantrieb wird in EP 1 593 893 A1 für ein Sicherheitsventil vorgestellt. Ein Kolben führt eine Linearbewegung aus, die jedoch in eine Schwenkbewegung der Welle gewandelt wird. Eine Feder ist nicht direkt am Kolben, sondern an der gegenüberliegenden Seite einer Antriebsstange angeordnet.

US 2004/0154466 A1 offenbart ein Stellsystem für ein Regelungsventil. Aus DE 102 23 870 A1 ist ein elektromagnetischer Aktuator für ein Gaswechselventil einer Brennkraftmaschine bekannt.

Nachteilig an bisherigen Stellantrieben mit Sicherheitsstellung ist der mangelnde Verletzungsschutz und die mechanische Anfälligkeit gegen Beschädigung, wenn beispielsweise zur Positionsmessung eine Hebel- oder Getriebe-Mechanik mit einer Antriebsstange verbunden wird. Außerdem leiden die bekannten Systeme unter einer mangelnden Flexibilität beim Kombinieren verschiedener Stellwege für einen Stellantrieb, insbesondere wenn eine Positionsmessung nahe dem Stellantrieb vorgesehen ist.

Aufgabe der Erfindung ist es, die Nachteile des Stands der Technik zu überwinden, insbesondere einen Stellantrieb mit einer Positionsmessung vorzuschlagen, wobei die Struktur der Positionsmessung geschützt gegen äußere Einflüsse ist, ohne den strukturellen Aufwand dafür zu erhöhen. Insbesondere soll auf freiliegende Hebel verzichtet werden. Schließlich soll die Positionsmessung für unterschiedliche Stellwege an einem Stellantrieb einsetzbar sein.

Diese Aufgabe wird durch die Merkmale von Anspruch 1 gelöst. Danach ist ein Stellantrieb zum Stellen eines Stellglied, insbesondere eines Ventilglieds, für eine prozesstechnische Anlage, vorgesehen. Der Stellantrieb umfasst ein Antriebsteil zum Betätigen des Stellglieds. Bei einem translatorischen Stellantrieb ist üblicherweise das Antriebsteil eine Stellstange, die sich von der Innenseite eines Gehäuses des Stellantriebs heraus erstreckt und mit dem Stellglied lösbar gekoppelt ist. Beim Schwenkantrieb kann das Antriebsteil eine Stellwelle sein, die sich von der Innenseite des Gehäuses des Stellantriebs nach außen erstreckt und an der Gehäusewand drehbar gelagert ist. Des Weiteren hat der Stellantrieb einen Federkörper mit einem vorbestimmten Elastizitätsmodul. Der Federkörper kann als Schraubendruckfeder ausgebildet sein. Der Federkörper hat die Eigenschaft, dass er sich im Verlauf seiner Abmessung im Wesentlichen bei dem elastischen Verformen homogen verhält. Der zusammengedrückte Federkörper speichert und gibt elastische Rückstellkräfte an das Stellglied über das Antriebsteil von einer beliebigen Ausgangsstellung ab, um das Stellglied in eine vorbestimmte Zielstellung, insbesondere eine Sicherheitsstellung, zu drängen. Die Ausgangsstellung kann beliebig sein und das Ergebnis einer vorher stattfindenden Stellungsregelung. Die Zielstellung ist vorab festgelegt, und insbesondere eine Sicherheitsstellung, in der das Ventilglied einen Ventilsitz beispielsweise schließt.

Des Weiteren hat der Stellantrieb eine Einrichtung zum Erfassen der Stellung des Stellglieds, wobei die Stellungserfassungseinrichtung einen Abstand zwischen einer ersten, örtlich festgelegten Referenzstelle und einer zweiten Referenzstelle erfasst, die an einer sich relativ zur ersten Referenzstelle während der Stellbewegung des Antriebsteils bewegenden Außenseite des Federkörper örtlich festgelegt ist.

Die Erfindung nutzt die Kenntnis, dass sich der Federkörper, insbesondere Schraubendruckfeder in dessen Verlauf in Längsrichtung, also in Wirkrichtung der Rückstellkräfte homogen elastisch verhält. Erfasst man die Bewegung einer zweiten Referenzstelle an der Außenseite des Federkörpers während der Stellbewegung bezüglich einer ersten Referenzstelle, die ortsfest ebenfalls an der Außenseite des Federkörpers festgelegt ist, kann aufgrund des vorbestimmten Übersetzungsverhältnisses zwischen der ermittelten Abstandsänderung und der Gesamtlängenänderung des Federkörpers wegen dessen homogen-elastischen Eigenschaft eindeutig bestimmte werden, wie sich das Antriebsteil und somit das Stellglied unter dem Einfluss der Stellkräfte des Federkörpers bewegt haben. Somit ist eine präzise Erfassung der Ist-Position des Stellglieds während der Stellbewegung kontinuierlich durchführbar und insbesondere für eine Positionsregelung des Stellglieds nutzbar.

Die erste und/oder zweite Referenzstelle können jeweils durch einen geometrischen Punkt oder Flächenbereich realisiert sein. In einer bevorzugten Ausführung der Erfindung ist die erste Referenzstelle durch die Montageposition eines einfachen Positionssensors festgelegt, der beispielsweise mit einem Magnetfelderzeuger an der zweiten Referenzstelle zusammenwirkt, um die Abstandsänderung zwischen den Referenzstellen während der Stellbewegung insbesondere kontinuierlich zu erfassen.

Vorzugsweise liegen die erste und zweite Referenzstelle derart zueinander, dass sie bei der Deformation des Federkörpers und somit bei der Verlagerung des Stellglieds auf einem linearen Verlagerungspfad liegen, der sich im Wesentlichen längs der Rückstellrichtung des Federkörpers erstreckt.

Bei der Erfindung sind die erste und die zweite Referenzstelle innerhalb eines Gehäuses des Stellantriebs angeordnet und somit frei von externen, die Positionserfassungsmessung störenden Einflüssen. Das Gehäuse des Stellantriebs weist eine durch ein Antriebsflüid beaufschlagte Arbeitskammer, insbesondere eine pneumatische oder hydraulische Arbeitskammer, sowie eine Rückstellkammer auf. In der Rückstellkammer ist der Federkörper vorzugsweise vollständig untergebracht. Die erste und die zweite Referenzstelle sind innerhalb dieser Rückstellkammer angeordnet. Es sei klar, dass sowohl die Arbeitskammer als auch die Rückstellkammer mit einem Arbeitsfluid beaufschlagbar sind.

Bei einer Weiterbildung der Erfindung hat der Stellantrieb ein insbesondere fluidisch abgedichtetes Gehäuse, wobei insbesondere die Arbeitskammer von der Rückstellkammer durch eine Membran-Platten-Anordnung voneinander getrennt sind, wobei sich der Federkörper an der Platte, auf der das Antriebsteil befestigt ist, und einer Innenseite des Gehäuses abstützt.

Die erste Referenzstelle ist an einer gegenüber dem Ort der zweiten Referenzstelle unterschiedlichen Stelle, aber auch an der Außenseite des Federkörpers ortsfest liegen. Dabei ist es insbesondere bevorzugt, die erste und zweite Referenzstelle möglichst nahe aneinander zu positionieren. Aufgrund der kompakten Anordnung kann bei Ermittlung einer sehr geringen Abstandsänderung aufgrund des homogen-elastischen Verhaltens des Federkörpers und des damit vorbestimmten Übersetzungsverhältnisses zwischen der Abstandsänderung und der Gesamtlängenänderung des Federkörpers ein direkter Rückschluss auf die tatsächliche Verlagerung des Stellglieds erreicht werden.

Bei Ausführung der Erfindung ist der Federkörper als Schraubenfeder, insbesondere als eine Schraubendruckfeder, ausgebildet. Die zweite Referenzstelle liegt an der Außenseite einer Windung der Schraubenfeder. Auch die erste Referenzstelle ist an der Außenseite einer insbesondere der Windung der zweiten Referenzstelle vorzugsweise in Richtung der Rückstellkammer benachbarten Windung der Schraubenfeder derart ortsfest angeordnet sein, dass sich beim Deformieren der Schraubendruckfeder die erste und zweite Referenzstelle im Wesentlichen in Längsrichtung der Schraubenfeder, insbesondere in deren translatorischen Rückstellrichtung, linear aufeinander zu und weg bewegen .

Bei einer bevorzugten Ausführung der Erfindung sind die erste und die zweite Referenzstelle an sich insbesondere in Rückstellrichtung des Federkörpers unmittelbar benachbarten Windungen der Schraubenfeder angeordnet.

Bei einer bevorzugten Ausführung der Erfindung ist die Stellungserfassungseinrichtung, insbesondere der Sensor mit einem Stellungsregler signalübertragungsgemäß insbesondere über eine Signalleitung gekoppelt. Die Signalleitung kann als elektrisch leitfähiger Draht körperlich ausgeführt sein. Der Stellungsregler ist vorzugsweise innerhalb des Gehäuses des Stellantriebs, vorzugsweise in der Rückstellkammer, benachbart einer Messelektronik der Stellungserfassungseinrichtung angeordnet. Alternativ kann der Stellungsregler in einem geschlossenen Zusatzgehäuse an der Außenseite des Antriebsgehäuses angeordnet sein.

Bei der Erfindung ist an der ersten oder zweiten Referenzstelle ein Positionssensor insbesondere über einen mit der ersten und der zweiten Referenzstelle gekoppelten Kopplungsarm befestigt. Der Positionssensor kann die Position der zweiten bzw. ersten Referenzstelle relativ zur ersten bzw. zweiten Referenzstelle sensierend abgreifen. Der Kopplungsarm kann an einer Windung der Schraubendruckfeder angespritzt, angeschweißt oder angeschraubt sein, wobei weitere alternative Befestigungsmöglichkeiten angedacht sein können, die das elastische Verhalten des Federkörpers nicht beeinflussen. Sollte eine Beeinflussung der elastischen Eigenschaften des Federkörpers möglich sein, ist der Stellantrieb vor dem Betrieb hinsichtlich des geänderten Elastizitätsmoduls des Federkörpers neu zu kalibrieren.

Bei einer bevorzugten Ausführung der Erfindung ist der Sensor ein HALL-Sensor, ein AMR-Sensor oder dergleichen. Der Positionssensor kann eine Elektronikkomponente aufweisen. An der zweiten Referenzstelle ist ein Bauteil zum Erzeugen eines Magnetfelds, insbesondere ein Dauermagnet, vorzugsweise über eine Halteeinrichtung ortsfest angebracht, so dass der jeweilige Sensor die relative Verlagerung der zweiten Referenzstelle zur ersten Referenzstelle, an der vorzugsweise der Sensor positioniert ist, detektieren und ermitteln kann.

Bei einer Weiterbildung der Erfindung definiert das Elastizitätsmodul des Federkörpers einen Proportionalitätsbereich, innerhalb dessen der Federkörper zum Aufbau und Abgeben von Rückstellkräften verformbar ist. Der Proportionalitätsbereich des Elastizitätsmoduls ist vorbestimmt und insbesondere innerhalb einer Mikroelektronik der Stellungserfassungseinrichtung gespeichert, und der Proportionalitätsbereich ist gleich bleibend und insbesondere konstant. Tatsächlich kann sich der Proportionalitätsbereich bei unterschiedlichen Außenbedingungen, wie unterschiedliche Temperaturen, ändern. Allerdings ist vorzugsweise der Federkörper derart auszuwählen, dass der Proportionalitätsbereich im Rahmen der bekannten Betriebsbedingungen im Wesentlichen konstant bleibt.

Die Erfindung betrifft auch ein Feldgerät mit einem Stellventil und dem das Stellventil stellenden erfindungsgemäßen Stellantrieb.

Des Weiteren betrifft die Erfindung ein Verfahren gemäß Anspruch 10.

Der Erfindung liegt die überraschende Erkenntnis zugrunde, dass die Rückführung eines zu messenden großen Weges, der Gesamtlängenänderung des Federkörpers, auf einen kleinen Weg, der Abstandsänderung der Referenzstellen, ohne komplizierte Mechanik eines Hebels oder Zahnradgetriebes durch Verwendung nur eines Teils der Bewegung der Rückstellfeder durchführbar ist. Die Anzahl der Windungen der Rückstellfeder definiert ein eindeutiges Getriebe mit vielfacher Übersetzung.

Weitere Eigenschaften, Vorteile und Merkmale der Erfindung werden durch die folgende Beschreibung einer bevorzugten Ausführung der Erfindung anhand der beiliegenden Zeichnungen deutlich, in denen zeigen:
- Figur 1: eine schematische Seitenansicht eines erfindungsgemäßen pneumatischen Feldgeräts und einem Stellantrieb zum Stellen eines Ventilglieds;
- Figur 2a, 2b: jeweils Querschnittsansichten einer Schraubendruckfeder in einem komprimierten und entspannten Zustand, wobei die Figuren 2a, 2b das Prinzip der Positionsbestimmung gemäß einem vorbestimmten Übersetzungsverhältnis illustrieren; und
- Figur 3: eine Halbquerschnittsansicht einer erfindungsgemäßen Einrichtung zum Erfassen der Stellung eines von dem Stellantrieb betätigten Stellglieds eines Feldgeräts einer prozesstechnischen Anlage.

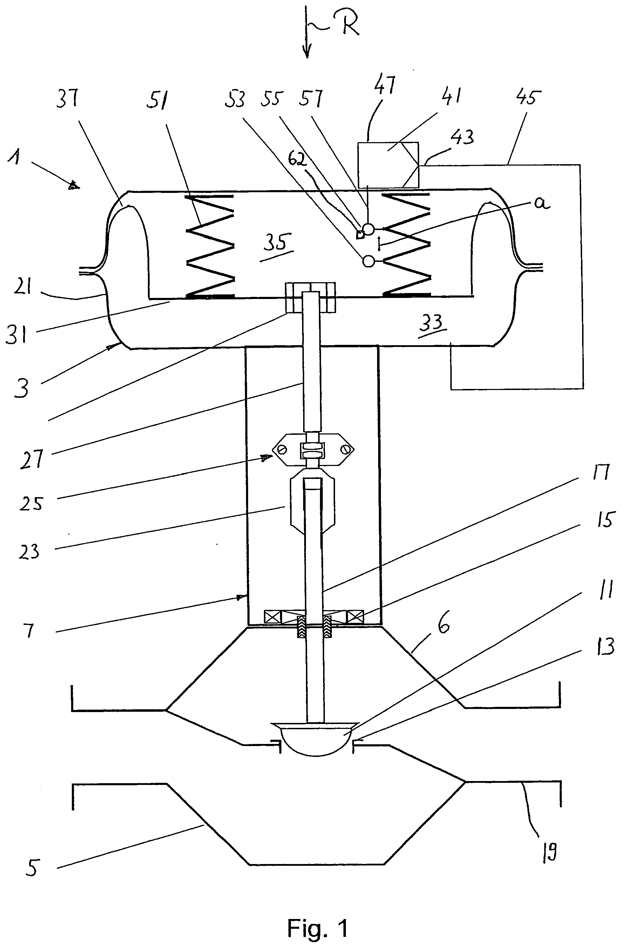

In Figur 1 ist ein pneumatisch betriebenes Feldgerät einer prozesstechnischen Anlage mit der Bezugsziffer 1 versehen. Das Feldgerät 1 umfasst einen pneumatischen Stellantrieb 3, ein Stellventil 5 und eine mechanische Kopplungseinrichtung 7 zwischen dem Stellantrieb 3 und dem Stellventil 5.

Das Stellventil 5 hat ein Ventilglied 11, das mit einem Ventilsitz 13, der innerhalb einer Prozessfluidleitung 19 der Anlage ausgebildet ist, öffnend und schließend zusammenwirken kann.

Das Stellventil 5 hat ein Ventilgehäuse 6 mit einem Durchgang, an dem eine Ventilpackung 15 für Dichtigkeit sorgt. Eine ventilseitige Stellstange 17 erstreckt sich durch den Durchgang des Ventilgehäuses hin zum pneumatischen Stellantrieb 3.

Zwischen dem Gehäuse des Stellventils 5 und dem Antriebsgehäuse 21 des Stellantriebs 3 ist ein Verbindungsjoch oder eine Laterne 23 angeordnet, an dem der Stellantrieb 3 auf dem Stellventil 5 getragen wird.

Innerhalb des vorzugsweise geschlossenen Verbindungsjochs 23 ist die Kopplungseinrichtung 7 vorgesehen, die einen Schnellverbinder 25 aufweist. Von dem Verbinder erstreckt sich eine stellantriebsseitige Stellstange 27 durch einen Durchgang im Antriebsgehäuse 21 hindurch und ist an einem Antriebsteller 31 befestigt. Der Stellantrieb 3 ist in eine Arbeitskammer 33 und in einer Rückstellkammer 35 unterteilt. Die Trennung der Arbeitskammer 33 und der Rückstellkammer 35 wird durch eine Membran-Platten-Anordnung, nämlich den Antriebsteller 31 sowie eine Membran 37, realisiert, wobei die Membran 37 an der Außenseite des Antriebsgehäuses 21 zwischen im Wesentlichen gleich geformten Oberdeckel und Unterdeckel des Antriebsgehäuses 21 fest und fluiddicht eingeklemmt ist.

An der Außenseite des Stellantriebs 3, insbesondere an der von dem Stellventil 5 abgewandten Außenseite des Antriebsgehäuses 21 ist ein Stellungsregler 41 befestigt, der einen pneumatischen Signalausgang 43 aufweist, an dem der Stellungsregler 41 ein pneumatisches Regelsignal über eine Leitung 45 an den Stellantrieb 3, insbesondere an die Arbeitskammer 33 abgibt. Um die Position des Ventilglieds 11 zu bestimmen, hat der pneumatische Stellantrieb 3, insbesondere der Stellungsregler 41, eine Stellungserfassungseinrichtung, deren Verarbeitungsmesselektronik innerhalb des Stellungsreglergehäuses 47 untergebracht ist. Zum Erfassen der Position nutzt die Stellungserfassungseinrichtung die elastische Verformung einer der innerhalb der Rückstellkammer angeordneten Rückstellfeder, einer Schraubendruckfeder 51. Hierzu ist eine erste Referenzstelle 53 und eine zweite Referenzstelle 55 ortsfest an der Außenseite der Schraubendruckfeder 51 definiert. Ein Positionssensor, der beispielsweise an der zweiten Referenzstelle 55 angeordnet ist, erfasst kontinuierlich den kürzesten Abstand a in der Rückstellrichtung R zwischen der ersten und der zweiten Referenzstelle 53, 55. Der Positionssensor 62 an der zweiten Referenzstelle 55 ist über eine Signalleitung 57 mit dem Stellungsregler 41 signalübertragungsgemäß verbunden.

Aufgrund der homogenen elastischen Verformung der Schraubendruckfeder ist es möglich, zwei unmittelbar benachbarte Messreferenzstellen im kurzen Abstand festzulegen, ohne die gesamte Länge der Schraubendruckfeder 51 betrachten zu müssen. Die kleine Abstandsänderung zwischen den Referenzstellen 53, 55 stellt ein direktes Übersetzungsverhältnis aufgrund der homogenen Verformung der Schraubendruckfeder 51 dar, um den Verfahrweg des Ventilglieds zu ermitteln.

Überraschenderweise kann diese Art der Positionserfassung durch Abgreifen von Referenzstellen an der Schraubendruckfeder dazu benutzt werden, einen vollständigen Regelkreis zum Regeln der Position des Ventilglieds 11 zu realisieren. Es ist insofern überraschend, als die Schraubendruckfeder zur Erlangung der Sicherheitsstellung dient und eigentlich nicht für den Regelprozess. In einer Notsituation, also bei Entlüftung der Arbeitskammer 33, wird das Ventilglied 11 in die sichere Sicherheitsposition verfahren, in der das Ventilglied 11 fluiddicht an dem Ventilsitz 13 anliegt.

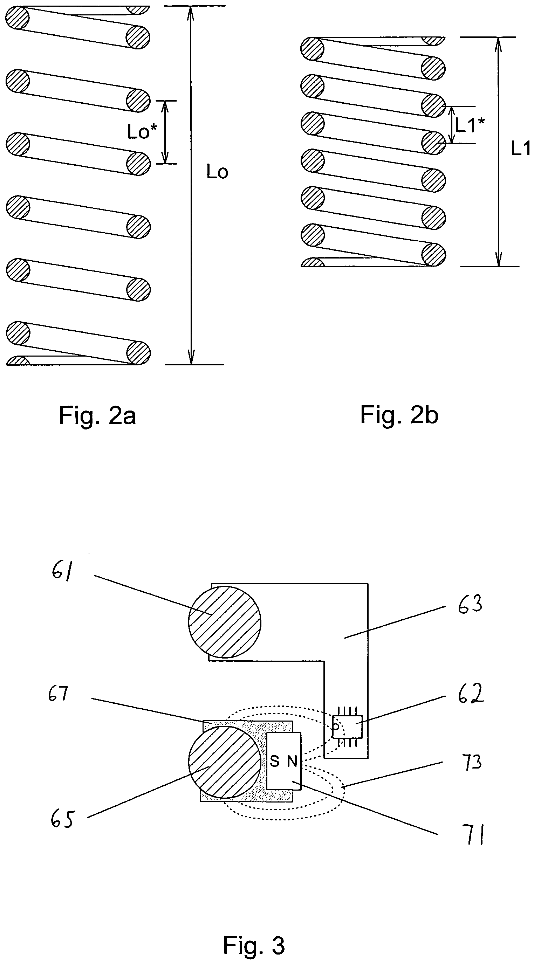

In den Figuren 2a und 2b ist das Versetzungsverhältnis bildlich illustriert, das erfindungsgemäß dazu genutzt wird, bei Messung nur sehr kleiner Abstandsänderungen (Lo* - L1*) unmittelbar auf die Gesamtlängenveränderung (Lo - L1) schließen zu können.

In Figur 3 ist eine bevorzugte Ausführung der erfindungsgemäßen Stellerfassungseinrichtung ersichtlich. An einer Windung 61 einer Schraubendruckfeder 51 ist ein Kopplungsarm 63 befestigt, der eine L-Form aufweist. Am freien Ende des Kopplungsarms 63 ist ein AMR-Chip 62 vorgesehen, der signalübertragungsgemäß mit dem Stellungsregler 41 verbunden ist.

An der in Richtung der Rückstellkraft benachbart, darunterliegenden Windung 65 der Schraubendruckfeder 51, an der die zweite Referenzstelle ortsfest festgelegt ist, ist ein Träger 67 befestigt, an dem ein Permanentmagnet 71 getragen ist, der ein Magnetfeld erzeugt, von dem beispielhaft zwei Magnetfeldlinien 73 in Figur 3 angedeutet sind.

Bei einer Bewegung der Windung 61 auf die Windung 65 zu und davon weg ändert sich die Position des AMR-Chips 62 im Magnetfeld, welche Positionsänderung im Magnetfeld des Permanentmagneten 71 durch den AMR-Chip sensierbar ist. Aufgrund einer homogenen elastischen Struktur der Schraubendruckfeder und dem damit festgelegten Übersetzungsverhältnis ist es möglich, über die Verlagerung der Windung 61, 65 eine Gesamtlängenänderung der Schraubendruckfeder zu ermitteln, wodurch ein direkter Rückschluss auf die tatsächliche Verlagerung des Ventilglieds 11 möglich ist.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Feldgerät
- 3: pneumatischer Stellantrieb
- 5: Stellventil
- 6: Ventilgehäuse
- 7: Kopplungseinrichtung
- 11: Ventilglied
- 13: Ventilsitz
- 15: Ventilpackung
- 17: ventilseitige Stellstange
- 19: Prozessfluidleitung
- 21: Antriebsgehäuse
- 23: Verbindungsjoch
- 25: Verbinder
- 27: stellantriebsseitige Stellstange
- 31: Antriebsteller
- 33: Arbeitskammer
- 35: Rückstellkammer
- 37: Membran
- 41: Stellungsregler
- 43: Signalausgang
- 45: Leitung
- 47: Stellungsreglergehäuse
- 51: Schraubendruckfeder
- 53: erste Referenzstelle
- 55: zweite Referenzstelle
- 57: Signalleitung
- 61, 65: Windung
- 62: AMR-Chip
- 63: Kopplungsarme
- 71: Permanentmagnet
- 73: Magnetfeldlinien

- a: Abstand
- Lo, Lo*: Abstandsänderungen
- L1, L*: Abstandsänderungen
- R: Rückstellrichtung

## Patentansprüche

1. Stellantrieb (3) zum Stellen eines Stellglieds für eine prozesstechnische Anlage, wobei der Stellantrieb (3) umfasst: ein Antriebsteil zum Betätigen des Stellglieds, eine Schraubenfeder (51) mit einem vorbestimmten Elastizitätsmodul, wobei durch elastische Rückstellkräfte der Schraubenfeder (51) das Stellglied über das Antriebsteil von einer Ausgangsstellung in eine Zielstellung gedrängt wird, eine Einrichtung zum Erfassen der Stellung des Stellglieds und ein Gehäuse, wobei das Gehäuse eine durch ein Arbeitsfluid beaufschlagte, pneumatische oder hydraulische Arbeitskammer (33) sowie eine Rückstellkammer aufweist, in welcher die Schraubenfeder (51) untergebracht ist, wobei die Stellungserfassungseinrichtung einen Sensor zum Bestimmen eines Abstands zwischen einer ersten, örtlich festgelegten Referenzstelle (53) und einer zweiten Referenzstelle (55) umfasst, wobei der Sensor als Positionssensor (62) ausgeführt ist und an der ersten (53) oder zweiten (55) Referenzstelle befestigt ist, **dadurch gekennzeichnet, dass** der Positionssensor (62) die Position der zweiten (55) bzw. ersten (53) Referenzstelle relativ zur ersten (53) bzw. zweiten (55) Referenzstelle sensierend abgreift, wobeidie zweite Referenzstelle (53) an einer sich relativ zur ersten Referenzstelle (53) während der Stellbewegung des Antriebsteils bewegenden Außenseite einer Windung der Schraubenfeder (51) örtlich festgelegt ist, wobei die erste (53) und die zweite (55) Referenzstelle innerhalb der Rückstellkammer angeordnet sind, und
wobei die erste Referenzstelle (53) an der Außenseite einer Windung derselben Schraubenfeder (51) ortsfest liegt.

2. Stellantrieb nach Anspruch 1, **dadurch gekennzeichnet, dass** die Rückstellkammer mit einem Arbeitsfluid beaufschlagbar ist.

3. Stellantrieb (3) nach Anspruch 1 oder 2, **dadurch gekennzeichnet, dass** der Stellantrieb (3) ein abgedichtetes Gehäuse aufweist.

4. Stellantrieb (3) nach einem der vorstehenden Ansprüche, **dadurch gekennzeichnet, dass** die erste Referenzstelle (53) an der Außenseite einer zur Windung (61) der zweiten Referenzstelle benachbarten Windung derselben Schraubenfeder (51) ortsfest liegt.

5. Stellantrieb (3) nach einem der vorstehenden Ansprüche, **dadurch gekennzeichnet, dass** die erste (53) und die zweite (55) Referenzstelle an sich in Rückstellrichtung (R) des Federkörpers unmittelbar benachbarten Windungen der Schraubenfeder (51) angeordnet sind.

6. Stellantrieb (3) nach einem der vorstehenden Ansprüche, **dadurch gekennzeichnet, dass** die Stellungserfassungseinrichtung mit einem Stellungsregler (41) signalübertragungsgemäß gekoppelt ist, wobei der Stellungsregler (41) innerhalb des Gehäuses des Stellantriebs (3) angeordnet ist oder in einem geschlossenen Zusatzgehäuse an der Außenseite des Antriebsgehäuses (21) angeflanscht ist.

7. Stellantrieb (3) nach einem der vorstehenden Ansprüche, **dadurch gekennzeichnet, dass** der Sensor an der ersten (53) oder zweiten (55) Referenzstelle über einen mit der ersten (53) oder zweiten (55) Referenzstelle gekoppelten Kopplungsarm (63) befestigt ist.

8. Stellantrieb (3) nach einem der vorstehenden Ansprüche, **dadurch gekennzeichnet, dass** der Sensor ein HALL-Sensor oder ein AMR-Sensor ist, wobei an der zweiten (55) bzw. ersten (53) Referenzstelle ein Dauermagnet (71) ortsfest angeordnet ist.

9. Stellantrieb (3) nach einem der vorstehenden Ansprüche, **dadurch gekennzeichnet, dass** das Elastizitätsmodul einen vorbestimmten, gleichbleibenden Proportionalitätsbereich definiert, innerhalb dessen der Federkörper zum Aufbau und Abgeben der Rückstellkräfte verformt ist.

10. Verfahren zum Erfassen einer Stellung eines durch einen Stellantrieb (3) gemäß einem der Ansprüche 1 bis 9 zu stellenden Stellglieds für eine prozesstechnische Anlage, wobei das Stellglied über das Antriebsteil von einer Ausgangsstellung in eine Zielstellung mittels der Schraubenfeder (51) gedrängt wird, **dadurch gekennzeichnet, dass** die erste Referenzstelle (53) an der Außenseite einer Windung der Schraubenfeder (51) örtlich festgelegt wird, dass die zweite Referenzstelle (55), die sich während der Stellbewegung des Antriebsteils relativ zur ersten Referenzstelle (53) bewegt, an der Außenseite einer Windung derselben Schraubenfeder (51) örtlich festgelegt wird, wobei die erste und die zweite Referenzstelle (53, 55) innerhalb der Rückstellkammer in dem Gehäuse des Stellantriebs angeordnet werden und wobei der Positionssensor (62) an der ersten (53) oder zweiten (55) Referenzstelle befestigt wird, und dass der Abstand zwischen der ersten Referenzstelle (53) und der zweiten Referenzstelle (55) erfasst wird, indem der Positionssensor (62) die Position der zweiten (55) bzw. ersten (53) Referenzstelle relativ zur ersten (53) bzw. zweiten (55) Referenzstelle sensierend abgreift.

## Claims

1. An actuating drive (3) for actuating an actuating device for a process plant, wherein the actuating drive (3) comprising: a drive member for actuating the actuating device, a helical spring (51) with a predetermined modulus of elasticity, wherein the actuating device being pushed via the drive member by elastic return forces of the helical spring from an initial position to a target position, a capturing device for capturing the position of the actuating device and a housing, wherein the housing having a pneumatic or hydraulic working chamber (33) , the working chamber being exposed to a working fluid, and a return chamber in which the helical spring (51) is lodged, wherein the position capturing device comprising a sensor for determining the distance between the first spatially determined reference position (53) and the second reference position (55), wherein the sensor is designed as position sensor (62) and is fixed to the first (53) or the second (55) reference position, **characterized in that** the position sensor (62) is capturing in a sensing manner the position of the second (55) or the first (53) reference position relative to the first (53) or second (55) reference position, respectively, wherein the second reference position (53) is spatially determined to an outer surface of the winding of the helical spring (51) moving relatively to the first reference position (53) during the positioning movement of the drive member, wherein the first (53) and the second (55) reference position being disposed inside the return chamber, and
wherein the first reference position (53) is positioned at the outer surface of the winding of the same helical spring (51) in a stationary fashion.

2. An actuating drive according to claim 1, **characterized in that** the return chamber can be exposed to a working fluid.

3. An actuating drive (3) according to claim 1 or 2, **characterized in that** the actuating drive (3) has a fluid-tight housing.

4. An actuating drive (3) according to one of the preceding claims, **characterized in that** the first reference position (53) being disposed in stationary fashion at the outer surface of a winding (61) being adjacent to the winding of the second reference position of the same helical spring (51).

5. An actuating drive (3) according to one of the preceding claims, **characterized in that** the first (53) and the second (55) reference position are disposed at windings of the helical spring directly adjacent in return direction (R).

6. An actuating drive (3) according to one of the preceding claims, **characterized in that** the position capturing device is coupled in a signal-transmitting manner with a positioner (41), wherein the positioner (41) being disposed inside the housing of the actuating drive (3) or being flanged in a closed additional housing at the outside of the drive housing (21).

7. An actuating drive (3) according to one of the preceding claims, **characterized in that** the sensor is fixed to the first (53) and the second (55) reference position via a connecting arm (63) coupled at the first (53) or the second (55) reference position.

8. An actuating drive (3) according to one of the preceding claims, **characterized in that** the sensor is a HALL or an AMR sensor, wherein a permanent magnet (71) being disposed in a stationary fashion at the second (55) or the first (53) reference position, respectively.

9. An actuating device (3) according to one of the preceding claims, **characterized in that** the modulus of elasticity defines a predetermined, constant proportionality range within which the spring body is deformed for generating and releasing the return forces.

10. Method for capturing the position of an actuating device actuated by an actuating drive (3) according to one of the claims 1 to 9 for a process plant, wherein the actuating drive is pushed via the drive member from an initial position to a target position by the helical spring (51), **characterized in that** the first reference position (53) is spatially determined at the outer surface of the winding of the helical spring (51) , **in that** the second reference position (55), moving relatively to the first reference position 853) during the positioning movement of the actuation member is spatially determined at the outer surface of the winding of the same helical spring (51), wherein the first and the second reference position (53, 55) are disposed within the return chamber in the housing of the actuating device and wherein the position sensor (62) is disposed at the first (53) or the second (55) reference position, and **in that** the distance between the first reference position(53) and the second reference position (55) is captured as the position sensor (62) is capturing in the sensing manner the position of the second (55) or first (53) reference position relative to the first (53) or the second (55) reference position, respectively.

## Revendications

1. Actionneur (3) pour le réglage d'un organe de réglage pour une installation industrielle, l'actionneur (3) comprenant : une partie d'entraînement pour la commande de l'organe de réglage, un ressort hélicoïdal (51) avec un module d'élasticité prédéterminé, l'organe de réglage étant poussé dans une position cible à partir d'une position initiale par le biais de la partie d'entraînement par des forces de rappel du ressort hélicoïdal (51), un dispositif de détection de la position de l'organe de réglage et un boîtier, le boîtier présentant une chambre de travail (33) pneumatique ou hydraulique, sollicitée par un fluide de travail, ainsi qu'une chambre de rappel, dans laquelle le ressort hélicoïdal (51) est logé, le dispositif de détection de la position comportant un capteur permettant de déterminer un écart entre un premier point de référence localisé (53) et un deuxième point de référence (55), le capteur étant conçu comme un capteur de position (62) et fixé au premier (53) ou au deuxième (55) point de référence, **caractérisé en ce que** le capteur de position (62) détecte la position du deuxième (55) ou du premier (53) point de référence par rapport au premier (53) ou au deuxième (55) point de référence, le deuxième point de référence (55) étant localisé sur un côté extérieur d'une spire du ressort hélicoïdal (51) lequel se déplace par rapport au premier point de référence (53) pendant le mouvement de réglage de la partie d'entraînement, les premier (53) et deuxième (55) points de référence étant disposés à l'intérieur de la chambre de rappel, et
dans lequel le premier point de référence (53) se situe sur le côté extérieur d'une spire du même ressort hélicoïdal (51).

2. Actionneur selon la revendication 1, **caractérisé en ce que** la chambre de rappel peut être sollicitée avec un fluide de travail.

3. Actionneur (3) selon la revendication 1 ou 2, **caractérisé en ce que** l'actionneur (3) présente un boîtier étanche.

4. Actionneur (3) selon l'une des revendications précédentes, **caractérisé en ce que** le premier point de référence (53) se situe sur le côté extérieur d'une spire adjacente à la spire (61) du deuxième point de référence du même ressort hélicoïdal (51).

5. Actionneur (3) selon l'une des revendications précédentes, **caractérisé en ce que** le premier (53) et le deuxième (55) point de référence sont disposés sur des spires immédiatement adjacentes du ressort hélicoïdal (51) dans la direction de rappel (R) du corps de ressort.

6. Actionneur (3) selon l'une des revendications précédentes, **caractérisé en ce que** le dispositif de détection de la position est couplé à un régulateur de position (41) par transmission de signaux, le régulateur de position (41) étant disposé à l'intérieur du boîtier de l'actionneur (3) ou bridé sur le côté extérieur du boîtier d'entraînement (21) dans un boîtier supplémentaire fermé.

7. Actionneur (3) selon l'une des revendications précédentes, **caractérisé en ce que** le capteur est fixé au premier (53) ou au deuxième (55) point de référence par le biais d'un bras de couplage (63) couplé au premier (53) ou au deuxième (55) point de référence.

8. Actionneur (3) selon l'une des revendications précédentes, **caractérisé en ce que** le capteur est un capteur Hall ou un capteur AMR, un aimant permanent (71) étant disposé fixement au niveau du deuxième (55) ou du premier (53) point de référence.

9. Actionneur (3) selon l'une des revendications précédentes, **caractérisé en ce que** le module d'élasticité définit une plage de proportionnalité constante prédéterminée, dans laquelle le corps de ressort est déformé pour établir et délivrer les forces de rappel.

10. Procédé pour la détection d'une position d'un organe de réglage à régler à l'aide d'un actionneur (3) selon l'une des revendications 1 à 9 pour une installation industrielle, dans lequel l'organe de réglage est poussé dans une position cible à partir d'une position initiale par le biais de la partie d'entraînement à l'aide du ressort hélicoïdal (51), **caractérisé en ce que** le premier point de référence (53) est localisé sur le côté extérieur d'une spire du ressort hélicoïdal (51), **en ce que** le deuxième point de référence (55), lequel se déplace par rapport au premier point de référence (53) pendant le mouvement de réglage de la partie d'entraînement, est localisé sur le côté extérieur d'une spire du même ressort hélicoïdal (51), les premier et deuxième points de référence (53, 55) étant disposés à l'intérieur de la chambre de rappel dans le boîtier de l'actionneur, et le capteur de position (62) étant fixé au premier (53) ou au deuxième (55) point de référence, et **en ce que** l'écart entre le premier point de référence (53) et le deuxième point de référence (55) est détecté par le capteur de position (62) détectant la position du deuxième (55) ou du premier (53) point de référence par rapport au premier (53) ou au deuxième (55) point de référence.
